# EUROPÄISCHE PATENTSCHRIFT

(11) **EP 2 508 365 B1**
(45) Veröffentlichungstag und Bekanntmachung des Hinweises auf die Patenterteilung: **28.08.2013**
(21) Anmeldenummer: 12160367.4
(22) Anmeldetag: 20.03.2012
(51) Int. Cl.: B60C 27/10

(54) **Verstellelement**
Adjustment element
Élément de réglage

(30) Priorität: 06.04.2011 AT 4892011
(43) Veröffentlichungstag der Anmeldung: 10.10.2012
(73) Patentinhaber: Pewag Schneeketten GmbH & Co KG, 8020 Graz (AT)
(72) Erfinder: Nieß, Bernhard, 8312 Ottendorf (AT)
(74) Vertreter: Patentanwaltskanzlei Matschnig & Forsthuber OG

(56) Entgegenhaltungen:
- CH-A- 162 880
- FR-A- 708 302
- US-A1- 2006 225 254

## Beschreibung

Die Erfindung bezieht sich auf ein Verstellelement für den Seitenstrang einer Gleitschutzkette.

Gleitschutzkette weisen üblicherweise einen inneren und einen äußeren Seitenstrang auf, wobei jedenfalls der äußere Seitenstrang zum Spannen der Kette mit Hilfe geeigneter Spannschlösser od. dgl. eingerichtet ist. Die Seitenstränge können als Ketten, als Seile, Drähte oder aus Kombinationen solcher Zugmittel ausgebildet sein. Ein Spannschloss für geschlossene Seitenstränge mit drahtförmigen Zugelementen ist beispielsweise der AT 504 476 A4 bekannt geworden.

Bei Seitensträngen, die zumindest abschnittsweise aus Kettengliedern bestehen, kann zum Anpassen der Gleitschutzkette an unterschiedliche Reifendimensionen ein einfacher Doppelhaken vorgesehen sein, in den die beiden Enden des äußeren Seitenstranges eingehängt werden, wobei entweder ein Endglied oder eines der dem Endglied vorgelagerten Glieder eingehängt werden. Im letzteren Fall bleiben ein oder mehrere Glieder frei, die zweckmä-βigerweise an dem Seitenstrang, d. h. der Spannkette, z. B. mit einer Klemme fixiert werden.

Das Einhängen von Gliedern am Ende eines Seitenstranges und das Sichern der überstehenden Glieder sind aber umständlich und für den Benutzer, besonders unter winterlichen Klimabedingungen oft schwierig.

CH 162880 beschreibt eine gattungsgemäße Einrichtung zum Festhalten und Spannen von Schneeketten, die ein als Lager für eine Schnecke dienendes Gehäuse und eine in die Schnecke eingreifende Zahnstange aufweist. Andere bekannte Spannelemente für Gleitschutzketten sind in FR 708302 und US 2006/0225254 A1 beschrieben.

Es ist eine Aufgabe der Erfindung, ein Verstellelement für den Seitenstrang einer Gleitschutzkette zu schaffen, das bei einfachen und schlanken Aufbau eine einfache Anpassung des Seitenstranges an unterschiedliche Reifenabmessungen und ebenso ein rasches Entspannen der Kette ermöglicht.

Diese Aufgabe wird mit einem Verstellelement der eingangs genannten Art gelöst, bei welchem erfindungsgemäß ein flacher, langgestreckter Schiebeteil in einem Gehäuse verschiebbar geführt ist, wobei das Vorderende des Schiebeteils durch eine Vorderöffnung des Gehäuses austritt und einen ersten Anschluss für den Seitenstrang besitzt, im Gehäuse eine handbetätigbare Sperre beweglich angeordnet und in zumindest einer Rastposition mit dem Schiebeteil verrastbar ist, der Schiebeteil einen Endanschlag aufweist, der sein völliges Austreten aus dem Gehäuse verhindert und das Gehäuse in seinem hinteren Bereich einen zweiten Anschluss für den Seitenstrang besitzt.

Die Erfindung bietet den Vorteil einer hohen Bedienerfreundlichkeit bei kostengünstiger Herstellbarkeit und erlaubt eine flache Bauweise, wodurch das Verstellelement ohne abzustehen an einer Reifenflanke anliegen kann.

Bei einer zweckmäßigen Variante der Erfindung ist vorgesehen, dass im vorderen Bereich des Gehäuses ein Sperrschieber im Wesentlichen quer zu dem Schiebeteil verschiebbar und in zumindest einer Rastposition mit dem Schiebeteil verrastbar ist, wobei der Sperrschieber in Richtung der zumindest einen Rastposition federbelastet ist, eine von außen zugängliche Handhabe besitzt, und durch Druck auf die Handhabe gegen die Federbelastung der Schiebeteil freigegeben wird. Diese Ausbildung weist einen extrem einfachen Aufbau auf, der dennoch die gestellte Aufgabe in allen Belangen erfüllt.

Hier kann bei einer bevorzugten Weiterbildung vorgesehen sein, dass der Schiebeteil zumindest eine Ausnehmung besitzt, in welche der Sperrschieber einrastbar ist bzw. dass der Sperrschieber eine im Wesentlichen dem Querschnitt des Schiebeteils angepasste Öffnung besitzt, durch welche der Schiebeteil geführt ist, wobei er mit einer Begrenzung der Öffnung in die zumindest eine Ausnehmung einrastbar ist.

Es kann auch von Vorteil sein, wenn der Endanschlag des Schiebeteils als Verbreiterung desselben ausgebildet ist, welche mit der Umrandung der Ausnehmung des Sperrschiebers zumindest abschnittsweise zusammen wirken kann.

Im Sinne eines einfachen und kompakten Aufbaus kann es zweckdienlich sein, wenn der Sperrschieber eine einstückige, im Wesentlich parallel zur Längsachse des Verstellelements verlaufende Abwinkelung aufweist, deren Außenfläche die Handhabe bildet, wogegen zwischen ihrer Innenfläche und dem Gehäuse eine Schraubenfeder angeordnet ist.

Falls der Seitenstrang im Bereich des Verstellelements als Spannkette ausgebildet ist, kann mit Vorteil vorgesehen sein, dass der erste Anschluss am Vorderende des Schiebeteils als Bohrung zur Aufnahme eines Kettenglieds ausgebildet ist bzw. der zweite Anschluss im hinteren Bereich des Gehäuses als im Gehäuse verankerter Bolzen zur Aufnahme eines Kettenglieds ausgebildet ist.

Die Erfindung samt weiteren Vorteilen ist im Folgenden an Hand einer beispielsweisen Ausführungsform näher erläutert, die in der Zeichnung veranschaulicht ist. In dieser zeigen
Fig. 1 eine linke Seitenansicht eines Verstellelements nach der Erfindung mit völlig eingeschobenem Schiebeteil und vorne und hinten eingehängten Kettengliedern,
Fig. 2 eine Ansicht wie Fig. 1 mit vollständig weg geschnittener linker Gehäusehälfte,
Fig. 3 eine Ansicht wie Fig. 2, jedoch mit vollständig ausgefahrenem Schieberteil,
Fig. 4 eine perspektivische Ansicht des Verstellelements in der Stellung nach Fig. 1,
Fig. 5 eine perspektivische Ansicht des Verstellelements in der Stellung nach Fig. 3,
Fig. 6 den Schiebeteil und einen Sperrschieber des Verstellelements, freigestellt in einer Explosionsdarstellung und
Fig. 7 Anordnung eines Verstellelements nach den vorgehenden Figuren an einer auf einem Reifen angelegten Gleitschutzkette.

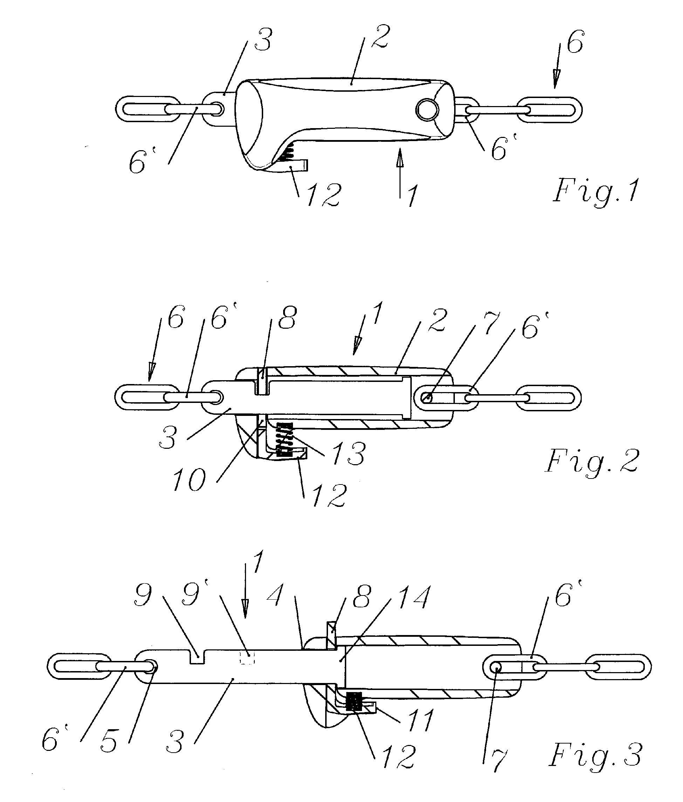

Auf die Fig. 1 bis 6 Bezug nehmend erkennt man, dass ein Verstellelement 1 nach der Erfindung ein Gehäuse 2 besitzt, in dem ein flacher, langgestreckter Schiebeteil 3 in einem verschiebbar geführt ist, wobei das Vorderende des Schiebeteils durch eine Vorderöffnung 4 des Gehäuses austritt und einen ersten Anschluss in Form einer Bohrung 5 oder Öffnung für einen Seitenstrang 6 besitzt, von dem in den Fig. 1 bis 5 je zwei Glieder 6' gezeigt sind. Das Gehäuse 2 besitzt in seinem hinteren Bereich einen zweiten Anschluss in Form eines Bolzens 7, in den ein Kettenglied 6' des Seitenstrangs 6 eingehängt ist.

Im vorderen Bereich des Gehäuses 2 ist ein Sperrschieber 8 im Wesentlichen quer zu dem Schiebeteil 3 verschiebbar. Der Schiebeteil 3 weist an seinem vorderen Endbereich eine nach oben offene Ausnehmung 9 auf, wobei jedoch auch mehrere solcher Ausnehmungen vorgesehen sein können. Strichliert ist in Fig. 3 eine weitere Ausnehmung 9' angedeutet.

Sperrschieber 8 besitzt eine im Wesentlichen dem Querschnitt des Schiebeteils 3 angepasste Öffnung 10, durch welche der Schiebeteil geführt ist, wobei er mit einer Begrenzung der Öffnung in die Ausnehmung 9 einrastbar ist.

Der Sperrschieber 8 besitzt weiters eine einstückige, im Wesentlich parallel zur Längsachse des Verstellelements 1 verlaufende Abwinkelung 11, deren Außenfläche eine Handhabe 12 bildet, wogegen zwischen der Innenfläche der Abwinkelung und dem Gehäuse 2 eine Schraubenfeder 13 angeordnet ist.

Durch die Belastung mit der Feder 13 bleibt der Sperrschieber 8 mit dem Schiebeteil 3 verrastet, er wird jedoch freigegeben, falls der Sperrschieber, z. B. durch Daumendruck eines Benutzers, gegen die Kraft der Feder nach oben (in der Zeichnung) geschoben wird.

Der Schiebeteil 3 besitzt an seinem hinteren Ende einen Endanschlag 14, der als Verbreiterung ausgebildet ist, welche mit der Umrandung der Ausnehmung 10 des Sperrschiebers 8 zusammen wirken kann.

Das Gehäuse 2 kann, ebenso wie der Sperrschieber 8 aus hochfestem Kunststoff, beispielsweise glasfaserverstärktem Polyamid hergestellt sein, der Schiebeteil 3 hingegen aus Stahl. Dem Fachmann stehen selbstverständlich viele andere Werkstoffe zur Verfügung, die er den Anforderungen entsprechend wählen kann. Ein typischer möglicher Verstellweg des Verstellelements 1 bei Anwendung auf PKW-Reifenschutzketten liegt bei 10 cm.

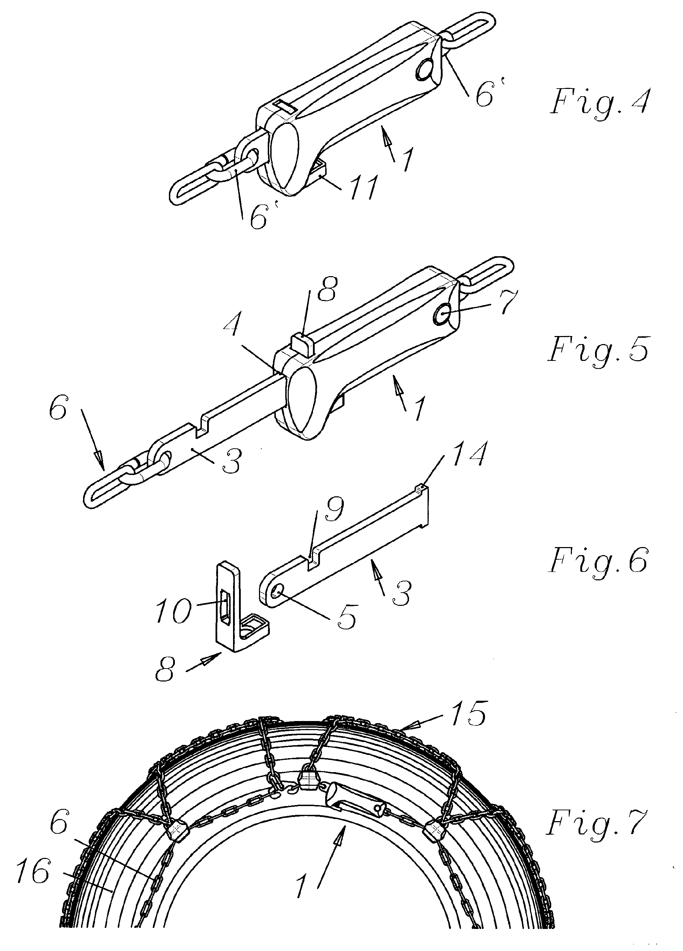

Aus Fig. 7 erkennt man, wie das Verstellelement 1 in den Seitenstrang 6 einer Gleitschutzkette 15 eingefügt ist, welche auf einem Fahrzeugreifen 16 angelegt ist. Ein hier nicht gezeigtes Spannschloss kann entweder in dem vorderen Seitenstrang 6 oder in einen Seitenstrang an der Innenseite des Fahrzeugstreifens eingefügt sein.

Die Funktion des erfindungsgemäßen Verstellelements 1 kann wie folgt beschrieben werden. Nach Anlegen der Gleitschutzkette 15 und Schließen und Spannen des äußeren Seitenstranges 6 kann je nach Notwendigkeit das Verstellelement 1 in eine verkürzte Stellung gebracht werden, in welcher der Sperrschieber 8 in die Ausnehmung 9 (oder eine andere Ausnehmung 9') des Schiebteils 3 eingreift und diesen gegen Verschieben blockiert (Position gemäß Fig. 1, 2 und 4). Soll die Spannkette bzw. der Seitenstrang 6 gelockert oder verlängert werden, so kann der Benutzer durch Druck auf die Handhabe 12 den Sperrschieber 8 gegen die Kraft der Feder 13 nach oben verschieben und dadurch die Blockierung des Schiebeteils 3 freigeben, der dementsprechend in dem Gehäuse 2 nach vorne gleiten kann, bis diese Bewegung durch den Endanschlag 14 gestoppt wird (Position gemäß Fig. 3 und 5).

Im Rahmen des durch die Patentansprüche festgelegten Schutzbereiches der Erfindung stehen dem Fachmann seinem Wissen entsprechend Variationen des Ausführungsbeispiels offen. Insbesondere sind, wie bereits erwähnt, mehrere Raststellungen möglich. An Stelle des Sperrschiebers können andere handbetätigte Sperren angewendet werde, beispielsweise als Hebel oder Doppelhebel ausgebildete Sperrklinken, die in Rasten des Schiebeteils 3 eingreifen.

## Patentansprüche

1. Verstellelement (1) für einen Seitenstrang (6) einer Gleitschutzkette (15) mit zwei Anschlüssen (5, 7) für den Seitenstrang, wobei
ein flacher, langgestreckter Schiebeteil (3) in einem Gehäuse (2) verschiebbar geführt ist, wobei das Vorderende des Schiebeteils durch eine Vorderöffnung (4) des Gehäuses austritt,
der Schiebeteil einen Endanschlag (14) aufweist, der sein völliges Austreten aus dem Gehäuse (2) verhindert,
das Gehäuse (2) in seinem hinteren Bereich einen zweiten Anschluss (7) für den Seitenstrang besitzt und
im Gehäuse eine Sperre (8) beweglich angeordnet ist, die in zumindest einer Rastposition mit dem Schiebeteil (3) verrastbar ist,
**dadurch gekennzeichnet, dass**
die Sperre (8) handbetätigbar ist und
das Vorderende des Schiebeteils einen ersten Anschluss (5) für den Seitenstrang (6) besitzt.

2. Verstellelement (1) nach Anspruch 1, **dadurch gekennzeichnet, dass** im vorderen Bereich des Gehäuses (2) ein Sperrschieber (8) im Wesentlichen quer zu dem Schiebeteil (3) verschiebbar und in zumindest einer Rastposition mit dem Schiebeteil verrastbar ist, wobei der Sperrschieber in Richtung der zumindest einen Rastposition federbelastet (13) ist, eine von außen zugängliche Handhabe (12) besitzt, und durch Druck auf die Handhabe gegen die Federbelastung der Schiebeteil freigegeben wird.

3. Verstellelement (1) nach Anspruch 2, **dadurch gekennzeichnet, dass** der Schiebeteil (3) zumindest eine Ausnehmung (9) besitzt, in welche der Sperrschieber (8) einrastbar ist.

4. Verstellelement (1) nach Anspruch 3, **dadurch gekennzeichnet, dass** der Sperrschieber (8) eine im Wesentlichen dem Querschnitt des Schiebeteils (3) angepasste Öffnung (10) besitzt, durch welche der Schiebeteil (3) geführt ist, wobei er mit einer Begrenzung der Öffnung in die zumindest eine Ausnehmung (9) einrastbar ist.

5. Verstellelement (1) nach Anspruch 1 und 4, **dadurch gekennzeichnet, dass** der Endanschlag (14) des Schiebeteils (3) als Verbreiterung desselben ausgebildet ist, welche mit der Umrandung der Ausnehmung (10) des Sperrschiebers (3) zumindest abschnittsweise zusammen wirken kann.

6. Verstellelement (1) nach einem der Ansprüche 1 bis 5, **dadurch gekennzeichnet, dass** der Sperrschieber (8) eine einstückige, im Wesentlich parallel zur Längsachse des Verstellelements (1) verlaufende Abwinkelung (11) aufweist, deren Außenfläche die Handhabe (12) bildet, wogegen zwischen ihrer Innenfläche und dem Gehäuse (2) eine Schraubenfeder (13) angeordnet ist.

7. Verstellelement (1) nach einem der Ansprüche 1 bis 6, **dadurch gekennzeichnet, dass** der erste Anschluss (5) am Vorderende des Schiebeteils (3) als Bohrung zur Aufnahme eines Kettenglieds (6') ausgebildet ist.

8. Verstellelement (1) nach einem der Ansprüche 1 bis 7, **dadurch gekennzeichnet, dass** der zweite Anschluss (7) im hinteren Bereich des Gehäuses (2) als im Gehäuse verankerter Bolzen (7) zur Aufnahme eines Kettenglieds (6') ausgebildet ist.

## Claims

1. An adjustment element (1) for a side strand (6) of an anti-skid chain (15) with two connectors (5, 7) for the side strand, wherein
a flat, elongate sliding part (3) is guided displaceably in a housing (2), wherein the front end of the sliding part exits through a front opening (4) in the housing,
the sliding part comprises an end stop (14), which prevents the sliding part from exiting fully from the housing (2),
the housing (2), in its rear region, has a second connector (7) for the side strand, and
a catch (8) is arranged movably in the housing and can be latched with the sliding part (3) in at least one detent position,
**characterised in that**
the catch (8) can be actuated by hand and
the front end of the sliding part has a first connector (5) for the side strand (6).

2. The adjustment element (1) according to Claim 1, **characterised in that**, in the front region of the housing (2), a catch slide (8) is displaceable substantially transversely to the sliding part (3) and can be latched with the sliding part in at least one detent position, wherein the catch slide is spring-loaded (13) in the direction of at least one detent position, has an externally accessible grip (12), and is released against the spring loading of the sliding part by exerting pressure onto the grip.

3. The adjustment element (1) according to Claim 2, **characterised in that** the sliding part (3) has at least one recess (9), into which the catch slide (8) can latch.

4. The adjustment element (1) according to Claim 3, **characterised in that** the catch slide (8) has an opening (10), which is matched substantially to the cross section of the sliding part (3) and through which the sliding part (3) is guided, wherein said sliding part can be latched into the at least one recess (9) with a delimitation of the opening.

5. The adjustment element (1) according to Claim 1 and 4, **characterised in that** the end stop (14) of the sliding part (3) is formed as a widening thereof, which can cooperate at least over portions with the border of the recess (10) in the catch slide (3).

6. The adjustment element (1) according to one of Claims 1 to 5, **characterised in that** the catch slide (8) comprises a one-piece angled portion (11) running substantially parallel to the longitudinal axis of the adjustment element (1), the outer surface of said angled portion forming the grip (12), whereas a coil spring (13) is arranged between the inner surface of said angled portion and the housing (2).

7. The adjustment element (1) according to one of Claims 1 to 6, **characterised in that** the first connector (5) is formed at the front end of the sliding part (3) as a bore for receiving a chain link (6').

8. The adjustment element (1) according to one of Claims 1 to 7, **characterised in that** the second connector (7) in the rear region of the housing (2) is formed as a pin (7), anchored in the housing, for receiving a chain member (6').

## Revendications

1. Elément de réglage (1) pour un tronçon latéral (6) d'une chaîne antiglisse (15) avec deux raccords (5, 7) pour le tronçon latéral,
une partie coulissante (3) plate étirée en longueur étant guidée de manière coulissante dans un boîtier (2), l'extrémité avant de la partie coulissante sortant par une ouverture avant (4) du boîtier,
la partie coulissante présentant une butée d'extrémité (14) qui empêche sa sortie complète du boîtier (2),
le boîtier possédant dans sa zone arrière un second raccord (7) pour le tronçon latéral et
un élément de verrouillage (8) étant disposé de manière mobile dans le boîtier (2), lequel peut être encliqueté dans au moins une position d'encliquetage avec la partie coulissante (3),
**caractérisé en ce que** l'élément de verrouillage (8) est actionnable à la main et l'extrémité avant de la partie coulissante possède un premier raccord (5) pour le tronçon latéral (6).

2. Elément de réglage (1) selon la revendication 1, **caractérisé en ce que** dans la zone avant du boîtier (2), une vanne d'arrêt (8) peut être déplacée sensiblement transversalement à la partie coulissante (3) et encliquetée dans au moins une position d'encliquetage avec la partie coulissante, la vanne d'arrêt étant sollicitée par ressort (13) en direction de l'au moins une position d'encliquetage, possédant une poignée (12) accessible de l'extérieur et étant libérée par pression sur la poignée contre la sollicitation par ressort de la partie coulissante.

3. Elément de réglage (1) selon la revendication 2, **caractérisé en ce que** la partie coulissante (3) possède au moins un évidement (9), dans lequel la vanne d'arrêt (8) peut être encliquetée.

4. Elément de réglage (1) selon la revendication 3, **caractérisé en ce que** la vanne d'arrêt (8) possède une ouverture (10) adaptée sensiblement à la section transversale de la partie coulissante (3), que traverse la partie coulissante (3), celle-ci pouvant être encliquetée avec une délimitation de l'ouverture dans l'au moins un évidement (9).

5. Elément de réglage (1) selon les revendications 1 et 4, **caractérisé en ce que** la butée finale (14) de la partie coulissante (3) est réalisée comme un élargissement de celle-ci qui peut coagir au moins par section avec la bordure de l'évidement (10) de la vanne d'arrêt (3).

6. Elément de réglage (1) selon l'une quelconque des revendications 1 à 5, **caractérisé en ce que** la vanne d'arrêt (8) présente une courbure (11) d'un seul tenant, s'étendant sensiblement parallèlement à l'axe longitudinal de l'élément de réglage (1), dont la surface extérieure forme la poignée (12), alors qu'un ressort cylindrique (13) est disposé entre sa surface intérieure et le boîtier (2).

7. Elément de réglage (1) selon l'une quelconque des revendications 1 à 6, **caractérisé en ce que** le premier raccord (5) est réalisé sur l'extrémité avant de la partie coulissante (3) sous la forme d'un perçage pour le logement d'un maillon de chaîne (6').

8. Elément de réglage (1) selon l'une quelconque des revendications 1 à 7, **caractérisé en ce que** le second raccord (7) est réalisé dans la zone arrière du boîtier (2) sous la forme d'un boulon (7) ancré dans le boîtier pour le logement d'un maillon de chaîne (6').
